# EUROPEAN PATENT APPLICATION

(11) **EP 2 891 980 A1**
(43) Date of publication of application: **08.07.2015**
(21) Application number: 13833832.2
(22) Date of filing: 04.07.2013
(51) Int. Cl.: G06F 9/50

(54) **ADJUSTMENT AND CONTROL METHOD AND SYSTEM FOR MULTI-CORE CENTRAL PROCESSING UNIT**

(30) Priority: 29.08.2012 CN 201210311472
(71) Applicant: Huizhou TCL Mobile Communication Co., Ltd., Huizhou, Guangdong 516006 (CN)
(72) Inventor: LIU, Lian, HuiZhou Guangdong 516006 (CN); WANG, Yuting, HuiZhou Guangdong 516006 (CN); WU, Xiaoyong, HuiZhou Guangdong 516006 (CN); ZHONG, Xiangjun, HuiZhou Guangdong 516006 (CN)
(74) Representative: Brachmann, Roland W.
(86) International application number: PCT/CN2013/078790
(87) International publication number: WO 2014/032477

(57) **Abstract**

Provided are an adjustment and control method and system for a multi-core central processing unit. The adjustment and control method comprises: receiving an operation instruction related to the adjustment and control of a multi-core CPU (S101); and in response to the operation instruction, conducting adjustment and control on CPU cores of the multi-core CPU through a bottom-layer core interface according to a preset CPU adjustment and control mode (S102). The working state of each CPU core of the multi-core central processing unit can be adjusted and controlled, thereby improving the working efficiency of the multi-core central processing unit, and saving energy.

## Description

### Field of the Invention

The present invention relates to the computer field and in particular to a method and system for regulation and control of multi-core central processing unit (CPU).

### Description of the Related Art

It has become a trend for Android-based mobile devices, such as smart phones and tablet computers, to use dual-core and quad-core processors. As multi-core CPU has certain advantage in processing capabilities, the applications of multi-core CPU on mobile devices are increasingly extensive. While multi-core CPU improves the performance of mobile devices to a certain degree, the bottleneck that mobile devices has in electrical power is increasingly prominent.

Right now, Android multi-core smart phones schedule processes to multiple cores of the multi-core CPU according to the "load balancing mechanism". With such a "load balancing mechanism", however, multiple cores of the multi-core CPU are always in the operating mode even when a mobile phone is in the idle or low-power state. As a result, electric energy that has already been in short supply is wasted in great quantities. When a mobile phone is in the idle or low-power state, a user may pay more attention to how to save power, rather than to the improvement of mobile phone performance; when a mobile phone has sufficient power, a user may want to improve the mobile phone performance using the processing capability of the multi-core CPU. However, none of the available mobile devices can perform regulation and control on multi-core CPU based on a user's needs.

As a result, the prior art still needs to be improved and developed.

### Summary of the Invention

In light of the above shortcomings of the prior art, the object of embodiments of the present invention is to provide a method and system for regulation and control of multi-core CPU, which is intended to solve the problem of the prior art that multi-core CPU cannot be regulated and controlled based on a user's needs.

The technical solution employed by embodiments of the present invention is as follows:

A method for regulation and control of multi-core CPU, comprising: receiving an operating command associated with regulation and control of the multi-core CPU; responding to the operating command, and performing regulation and control on the CPU cores of the multi-core CPU via the bottom layer core interface according to a preset CPU regulation and control mode, the CPU regulation and control mode comprising at least one of regulating the number of the CPU cores that are turned on, regulating the operating frequency of the CPU cores, and migrating processes of the CPU cores; and controlling the switching, frequency modulation and process migration of the CPU cores of the multi-core CPU by calling a subsystem of the multi-core CPU.

In the above method for regulation and control of multi-core CPU, the CPU regulation and control mode at least comprises a first regulation and control mode and a second regulation and control mode; the first regulation and control mode corresponds to that at least one of the CPU cores of the multi-core CPU is turned on and runs in a high-frequency state; the second regulation and control mode corresponds to that one of the CPU cores of the multi-core CPU is turned on and runs in a low-frequency state; wherein, when the CPU regulation and control mode is the first regulation and control mode, the method further comprises: recording the number of the CPU cores used by the process and the time of the CPU cores used by the process; and migrating the high-frequency process to an idle CPU core for processing, and regulating the idle CPU core to the high-frequency operating state; wherein, when the CPU regulation and control mode is the second regulation and control mode, the method further comprises: recording the number of the CPU cores used by the process and the time of the CPU cores used by the process; and shutting down the idle CPU cores, keeping a CPU core in operation, and performing frequency reduction processing on the CPU core in operation.

In the above method for regulation and control of multi-core CPU, the CPU regulation and control mode further comprises a third regulation and control mode; when the CPU regulation and control mode is the third regulation and control mode, the method further comprises: acquiring the information regarding operating states of the CPU cores of the multi-core CPU at a predetermined time interval; when the utilization of all CPU cores of the multi-core CPU is lower than a first predetermined value, keeping one of the CPU cores in operation and shutting down other CPU cores, and performing frequency reduction processing on the CPU core in operation; when the utilization of the CPU cores in operation is greater than a second predetermined value, turning on all CPU cores; and maintaining the balance of the utilization of the CPU cores of the multi-core CPU by migrating processes.

In the above method for regulation and control of multi-core CPU, the step of controlling the switching, frequency modulation and process migration of the CPU cores of the multi-core CPU by calling a subsystem of the multi-core CPU comprises: calling a function at the bottom layer or communicating with the bottom layer core via a socket mechanism; acquiring a function for regulating the number of the CPU cores that are turned on, the operating frequency of the CPU cores, and process migration; and controlling the switching, frequency modulation and process migration of the CPU cores of the multi-core CPU via the function.

A method for regulation and control of multi-core CPU, comprising: receiving an operating command associated with regulation and control of the multi-core CPU; responding to the operating command, and performing regulation and control on the CPU cores of the multi-core CPU via the bottom layer core interface according to a preset CPU regulation and control mode.

In the above method for regulation and control of multi-core CPU, the CPU regulation and control mode comprises at least one of regulating the number of the CPU cores that are turned on, regulating the operating frequency of the CPU cores, and migrating processes of the CPU cores.

In the above method for regulation and control of multi-core CPU, the CPU regulation and control mode at least comprises a first regulation and control mode and a second regulation and control mode; the first regulation and control mode corresponds to that at least one of the CPU cores of the multi-core CPU is turned on and runs in a high-frequency state; the second regulation and control mode corresponds to that one of the CPU cores of the multi-core CPU is turned on and runs in a low-frequency state.

In the above method for regulation and control of multi-core CPU, when the CPU regulation and control mode is the first regulation and control mode, the method further comprises: recording the number of the CPU cores used by the process and the time of the CPU cores used by the process; and migrating the high-frequency process to an idle CPU core for processing, and regulating the idle CPU core to the high-frequency operating state.

In the above method for regulation and control of multi-core CPU, when the CPU regulation and control mode is the second regulation and control mode, the method further comprises: recording the number of the CPU cores used by the process and the time of the CPU cores used by the process; and shutting down the idle CPU cores, keeping a CPU core in operation, and performing frequency reduction processing on the CPU core in operation.

In the above method for regulation and control of multi-core CPU, the CPU regulation and control mode further comprises a third regulation and control mode; when the CPU regulation and control mode is the third regulation and control mode, the method further comprises: acquiring the information regarding operating states of the CPU cores of the multi-core CPU at a predetermined time interval; when the utilization of all CPU cores of the multi-core CPU is lower than a first predetermined value, keeping one of the CPU cores in operation and shutting down other CPU cores, and performing frequency reduction processing on the CPU core in operation; when the utilization of the CPU cores in operation is greater than a second predetermined value, turning on all CPU cores; and maintaining the balance of the utilization of the CPU cores of the multi-core CPU by migrating processes.

In the above method for regulation and control of multi-core CPU, it further comprises: controlling the switching, frequency modulation and process migration of the CPU cores of the multi-core CPU by calling a subsystem of the multi-core CPU.

In the above method for regulation and control of multi-core CPU, the step of controlling the switching, frequency modulation and process migration of the CPU cores of the multi-core CPU by calling a subsystem of the multi-core CPU comprises: calling a function at the bottom layer or communicating with the bottom layer core via a socket mechanism; acquiring a function for regulating the number of the CPU cores that are turned on, the operating frequency of the CPU cores, and process migration; and controlling the switching, frequency modulation and process migration of the CPU cores of the multi-core CPU via the function.

A system for regulation and control of multi-core CPU, comprising: an operating command receiving module for receiving an operating command associated with regulation and control of the multi-core CPU; and a regulation and control module for responding to the operating command, and performing regulation and control on the CPU cores of the multi-core CPU via the bottom layer core interface according to a preset CPU regulation and control mode.

According to the above system for regulation and control of multi-core CPU, the CPU regulation and control mode comprises at least one of regulating the number of the CPU cores that are turned on, regulating the operating frequency of the CPU cores, and migrating processes of the CPU cores.

In the above system for regulation and control of multi-core CPU, the CPU regulation and control mode at least comprises a first regulation and control mode and a second regulation and control mode; the first regulation and control mode corresponds to that at least one of the CPU cores of the multi-core CPU is turned on and runs in a high-frequency state; the second regulation and control mode corresponds to that one of the CPU cores of the multi-core CPU is turned on and runs in a low-frequency state.

In the above system for regulation and control of multi-core CPU, when the CPU regulation and control mode is the first regulation and control mode, the regulation and control module is used for recording the number of the CPU cores used by the process and the time of the CPU cores used by the process, for migrating the high-frequency process to an idle CPU core for processing, and for regulating the idle CPU core to the high-frequency operating state.

In the above system for regulation and control of multi-core CPU, when the CPU regulation and control mode is the second regulation and control mode, the regulation and control module is used for recording the number of the CPU cores used by the process and the time of the CPU cores used by the process, for shutting down the idle CPU cores and keeping a CPU core in operation, and for performing frequency reduction processing on the CPU core in operation.

In the above system for regulation and control of multi-core CPU, the CPU regulation and control mode further comprises a third regulation and control mode; when the CPU regulation and control mode is the third regulation and control mode, the regulation and control module is used for acquiring the information regarding operating states of the CPU cores of the multi-core CPU at a predetermined time interval, and for, when the utilization of all CPU cores of the multi-core CPU is lower than a first predetermined value, keeping one of the CPU cores in operation and shutting down other CPU cores, and performing frequency reduction processing on the CPU core in operation; moreover, the regulation and control module is also used for, when the utilization of the CPU cores in operation is greater than a second predetermined value, turning on all CPU cores, and for maintaining the balance of the utilization of the CPU cores of the multi-core CPU by migrating processes.

In the above system for regulation and control of multi-core CPU, the regulation and control module is used for controlling the switching, frequency modulation and process migration of the CPU cores of the multi-core CPU by calling a subsystem of the multi-core CPU.

In the above system for regulation and control of multi-core CPU, the regulation and control module comprises: a native service module for calling a function at the bottom layer or communicating with the bottom layer core via a socket mechanism; an acquisition module for acquiring a function for regulating the number of the CPU cores that are turned on, the operating frequency of the CPU cores, and process migration; and a control module for controlling the switching, frequency modulation and process migration of the CPU cores of the multi-core CPU via the function.

Advantageous effects: it can regulate and control the working state of every CPU core of the multi-core CPU, and improve the processing capability of the multi-core CPU or attain the goal of saving energy and electric power.

### Brief Description of the Drawings

- Fig. 1: is a flowchart of the method for regulation and control of multi-core CPU according to an embodiment of the present invention.
- Fig.2: is a flowchart of the method shown in Fig.1 in the third regulation and control mode.
- Fig.3: is a flowchart of implementing the method shown in Fig.1.
- Fig.4: is a structural block diagram of the system for regulation and control of multi-core CPU according to an embodiment of the present invention.

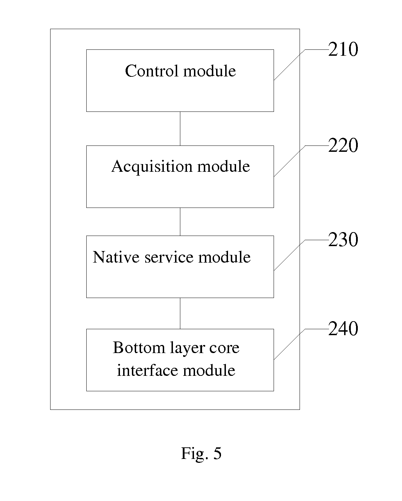

- Fig.5: is a structural block diagram of the regulation and control module of the system shown in Fig.4.

### Detailed Description of the Preferred Embodiment

Embodiments of the present invention provide a method and system for regulation and control of multi-core CPU. To make the object, technical solution and effects of the present invention clearer and more specific, the present invention will be further described in detail below. It should be understood that specific embodiments described herein are only used to describe the present invention, which are not used to limit the present invention.

The multi-core CPU in the embodiments of the present invention refer to a CPU having at least two cores, such as dual-core CPU, triple-core CPU, quad-core CPU, etc.

In the description below, specific embodiments of the present invention will be described with reference to steps and symbols of operations executed by one or more computers/mobile devices, unless otherwise stated. Therefore, these steps and operations will be understood, wherein execution by a computer/mobile device is mentioned several times, including manipulation by a computer/mobile device processing unit representative of electronic signals of data in a structured type. The manipulation converts the data or keeps them at positions in the memory system of the computer/mobile device, which can reconfigure or otherwise change in a way familiar to those skilled in the art operations of the computer/mobile device. The data structure maintained by the data is the physical position of the memory, which possesses specific properties defined by the data format. However, the description of the principles of the present invention in the above text does not represent a limitation. Those skilled in the art will learn that a variety of steps and operations to be described below may also be implemented in hardware.

The principles of the present invention employ many computations, communication environments or configurations for other general or specific purposes in the operations. Examples of computing systems, environments or configurations known to be applicable for embodiments of the present invention include (but are not limited to) tablet computers, mobile phones, personal computers, servers, multi-processor systems, systems primarily with microcomputers, mainframe computers and distributed computing environment, and any of the above systems or devices is included herein.

The term of "module" or "unit" used herein may be a software object or routine executed on the computing system. Various components, modules, engines and services described herein may be implemented as objects or processes executed on the computing system, while the system and method described herein are preferably implemented as software, and implementations in software and hardware or hardware are also probably and considered.

The method and system for regulation and control of multi-core CPU according to the embodiments of the present invention may run on a computer/mobile device, the computer may be a system formed by one or more of personal computers, servers, etc., and the mobile device may be a system formed by one or more of tablet computers, mobile phones, PDAs (Personal Digital Assistant), laptop computers, etc. The computer/mobile device may comprise any combination of processor, memory, sensor, switching element, power source, clock signal generator, and input and output apparatus. The any combination of processor, memory, sensor, switching element, power source, clock signal generator, and input and output apparatus in the above computer/mobile device is used to realize steps in the method for regulation and control of multi-core CPU and the functions of the system for regulation and control of multi-core CPU according to the embodiments of the present invention.

In the present embodiment, software program commands that the system for regulation and control of multi-core CPU corresponds to are stored in a memory and executed by the processor to realize the process management in the operating system.

In addition, the above memory is a storage medium that can be read by a computer, and the storage medium may be magnetic disc, CD, Read-Only Memory (ROM) or Random Access Memory (RAM).

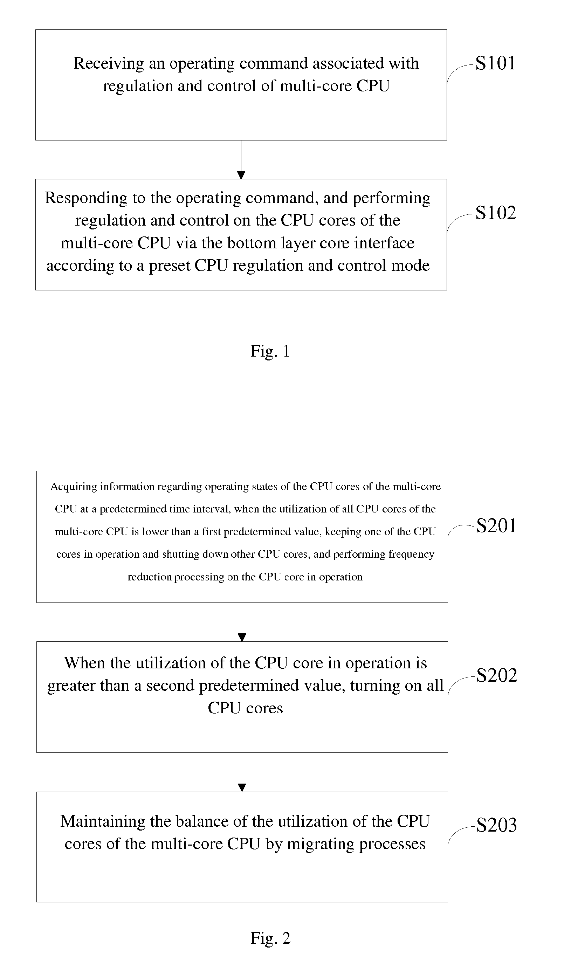

Please refer to Fig.1. Fig.1 is a flow chart of a preferred embodiment of the method for regulation and control of multi-core CPU according to the embodiment of the present invention. As shown in the figure, it comprises:
S101. Receiving an operating command associated with regulation and control of the multi-core CPU.
S102. Responding to the operating command, and performing regulation and control on the CPU cores of the multi-core CPU via the bottom layer core interface according to a preset CPU regulation and control mode.

The preset CPU regulation and control mode is generated through the following steps: presetting a CPU regulation and control mode for regulating the number of the CPU cores that are turned on, the operating frequency of the CPU cores, and process migration, and the CPU regulation and control mode comprises a predefined regulation and control mode and an automatic regulation and control mode.

In the embodiment of the present invention, the CPU regulation and control mode comprises at least one of regulating the number of the CPU cores that are turned on, regulating the operating frequency of the CPU cores, and migrating processes of the CPU cores. The CPU regulation and control mode at least comprises a first regulation and control mode and a second regulation and control mode; the first regulation and control mode corresponds to that at least one of the CPU cores of the multi-core CPU is turned on and runs in a high-frequency state; the second regulation and control mode corresponds to that one of the CPU cores of the multi-core CPU is turned on and runs in a low-frequency state.

Specifically, the CPU regulation and control modes in the embodiment of the present invention can be divided into two types, i.e. predefined regulation and control mode and automatic regulation and control mode. The predefined regulation and control mode is further divided into optimal performance mode and power save mode, the optimal performance mode corresponds to the above first regulation and control mode, and the power save mode corresponds to the above second regulation and control mode, i.e. the optimal performance mode is that the CPU cores of the multi-core CPU are all turned on and run in a high-frequency state, and the power save mode is that one CPU core of the multi-core CPU is turned on and runs in a low-frequency state. These modes will be described in detail below, respectively.

In the circumstance that a user's mobile device has sufficient power or can be charged, the user may want to use the mobile device to experience some large games or perform frequent online operations. In the process of mobile device operations or game experiences, the user will pay more attention to the performance of the mobile device. Therefore, the embodiment of the present invention provides the optimal performance mode of multi-core CPU such that the mobile device keeps its operations at the optimal performance.

In the embodiment of the present invention, when the CPU regulation and control mode is the first regulation and control mode, the method further comprises: recording the number of the CPU cores used by the process and the time of the CPU cores used by the process, migrating the high-frequency process to an idle CPU core for processing, and regulating the idle CPU core to the high-frequency operating state. When the CPU regulation and control mode is the second regulation and control mode, the method further comprises: recording the number of the CPU cores used by the process and the time of the CPU cores used by the process, shutting down the idle CPU cores, keeping a CPU core in operation, and performing frequency reduction processing on the CPU core in operation.

With respect to how to keep a multi-core CPU in the state of optimal performance, specifically, the number of the CPU cores used by the process may be recorded through the multi-core CPU architecture, and the time of the CPU cores used by the process may be recorded using its subsystem CPUACCT (a node system in Cgroups that generates the CPU use state report), thereby migrating the high-frequency process to an idle CPU core for processing through its subsystem CPUSET (a node in Cgroups that allocates independent CPU and memory to a process) according to the number of the CPU cores and the time of the CPU cores used by the process, and moreover, the CPU cores in use are fixed to run in the high-frequency operating state through the subsystem CPUSET, such that all CPU cores of the multi-core CPU run and remain in the high-frequency operating state, thus making full use of the advantage of strong processing capability of multi-core CPU and improving user experience in playing games or going online.

In the circumstance that a user's mobile device is low in power and cannot be charged, the user may only want to use the mobile device for normal communications. Therefore, the embodiment of the present invention provides a power save mode to shut down idle CPU cores and perform frequency reduction processing on the CPU core in use, thereby attaining the goal of saving power.

In the power save mode, the embodiment of the present invention may also perform process management through the multi-core CPU architecture, for example, recording the number of the CPU cores used by the process and using the subsystem CPUACCT to record the time of the CPU cores used by the process, shutting down idle CPU cores according to the number of the CPU cores and the time of the CPU cores used, keeping one CPU core in operation, and performing frequency reduction processing on the CPU core in operation within an acceptable range to ultimately realize the use of the mobile device in the power save mode.

In the circumstance that a user's mobile device is not low in power and can run normally, the user may want that the mobile device can trigger automatic regulation and control of the CPU cores according to specific situations, for example, through a specific event. In light of this, the embodiment of the present invention provides an automatic regulation and control mode to achieve that a mobile device regulates and controls the operations of CPU cores according to its own use situation.

In the embodiment of the present invention, the CPU regulation and control mode further comprises a third regulation and control mode; when the CPU regulation and control mode is the third regulation and control mode, the method further comprises:
S201. Acquiring the information regarding operating states of the CPU cores of the multi-core CPU at a predetermined time interval; when the utilization of all CPU cores of the multi-core CPU is lower than a first predetermined value, keeping one of the CPU cores in operation and shutting down other CPU cores, and performing frequency reduction processing on the CPU core in operation.
S202. When the utilization of the CPU cores in operation is greater than a second predetermined value, turning on all CPU cores.
S203. Maintaining the balance of the utilization of the CPU cores of the multi-core CPU by migrating processes.

The above first predetermined value may be a value in the range of 1% to 50%, for example, 22%, 35%, 43%, 50%, etc. The above second predetermined value may be a value in the range of 50% to 99%, for example, 61%, 77%, 89%, 92%, etc.

In the automatic regulation and control mode, specifically, the information regarding operating states of the CPU cores of the multi-core CPU is acquired at a predetermined time interval; in this step, specifically, the bottom layer actively reports the information regarding the operating state of every CPU core of the multi-core CPU through the CPUACCT subsystem at a predetermined time interval, then the information regarding the operating state may be reported in the way of a socket message, which is acquired by an automatic regulation and control system, and the automatic regulation and control system may automatically issue a regulation and control command according to the acquired information regarding the operating states of the multi-core CPU. When the utilization of all CPU cores of the multi-core CPU is lower than 20%, extra CPU cores are shut down and one CPU core is kept in operation, and frequency reduction processing is performed on the CPU core in operation; when the utilization of every CPU core of the multi-core CPU is lower than 20%, the CPUSET subsystem may be used to shut down idle CPU cores and only keep one CPU core in operation. When the utilization of the CPU core in operation is greater than 90%, all CPU cores are turned on; when the utilization of the CPU core in operation is greater than 90%, all or some CPU cores may be turned on through CPUSET to increase the processing capability of the mobile device. The balance of the utilization of the multi-core CPU is maintained by regulating process migration. When multiple CPU cores are in operation and when it is found that the utilization of multiple CPU cores of the multi-core CPU is not balanced, for example, the utilization of CPU0 is 95% while the utilization of CPU1 is 20%, each CPU core of the multi-core CPU will be kept balanced through a dynamic process migration operation.

The regulation and control mode of multi-core CPU will be described below in more details.

The embodiment of the present invention encapsulates the Cgroups (a mechanism provided in Linux kernel for limiting, isolating and recording physical resources used by a process, and the physical resources include CPU, I/O port, etc.) interface mainly via a bottom layer core interface, and calls its subsystem CPUSET to realize the control on the switching, frequency modulation and process migration of the CPU cores of the multi-core CPU.

In the embodiment of the present invention, the method further comprises: controlling the switching, frequency modulation and process migration of the CPU cores of the multi-core CPU by calling a subsystem CPUSET of the multi-core CPU.

Wherein, the step of controlling the switching, frequency modulation and process migration of the CPU cores of the multi-core CPU by calling the subsystem CPUSET of the multi-core CPU comprises:
S301. Calling a function at the bottom layer or communicating with the bottom layer core via a socket mechanism.
S302. Acquiring a function for regulating the number of the CPU cores that are turned on, the operating frequency of the CPU cores, and process migration.
S303. Controlling the switching, frequency modulation and process migration of the CPU cores of the multi-core CPU via the function.

Specifically, the method according to the embodiment of the present invention may comprise the following steps:

Setting up a system service for calling a function at the bottom layer or communicating with the bottom layer core via a socket mechanism; this is mainly the design of a Deamon service (system service) through Native Service, and the Deamon service is activated by an init root (the first process for the Linux kernel activation in an Android system) process, thereby achieving the remote calling of a function, specifically it may directly call a function at the bottom layer or communicate with the bottom layer core via a socket mechanism (an inter-process communication mechanism).

Calling the Deamon service and providing a function for regulating the number of the CPU cores that are turned on, the operating frequency of the CPU cores, and process migration through the Deamon service; the goal of this step is to use Framework to complete the direct connection between Native Service and JAVA API (Application Programming Interface), then complete the calling of the Deamon service through inter-process communication, and subsequently provide a series of JNI interface functions, such as opencpu, closecpu, etc. (opencpu, closecpu, etc. are self-defined function names for opening and closing CPU cores), by aiming at the upper layer.

Controlling the switching, frequency modulation and process migration of the CPU cores of the multi-core CPU is implemented through the function for regulating the number of the CPU cores that are turned on, the operating frequency of the CPU cores, and process migration. This step uses the JNI interface provided by API by aiming at the upper layer to complete the CPUControl class (the CPUControl class is a self-defined class name), realize a series of API interfaces for use by the Android apk program, and then achieve functions such as opening CPU cores, closing CPU cores, regulating the CPU frequency and progress migration.

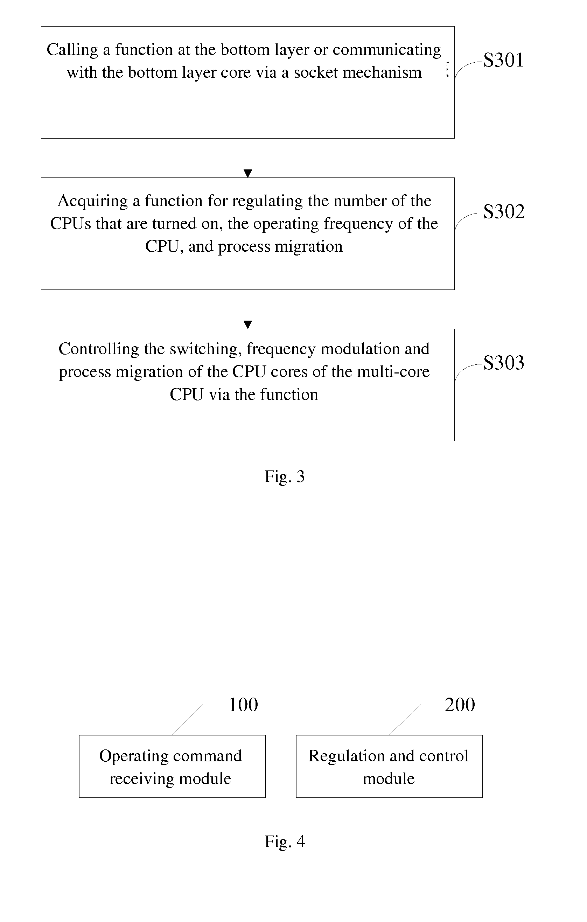

Based on the above method, the embodiment of the present invention further provides a system for regulation and control of multi-core CPU, which, as shown in Fig.4, comprises:
An operating command receiving module 100 for receiving an operating command associated with regulation and control of the multi-core CPU;
A regulation and control module 200 for responding to the operating command, and performing regulation and control on the CPU cores of the multi-core CPU via the bottom layer core interface according to a preset CPU regulation and control mode.

In the embodiment of the present invention, the CPU regulation and control mode comprises at least one of regulating the number of the CPU cores that are turned on, regulating the operating frequency of the CPU cores, and migrating processes of the CPU cores. The CPU regulation and control mode at least comprises a first regulation and control mode and a second regulation and control mode; the first regulation and control mode corresponds to that at least one CPU core of the multi-core CPU is turned on and runs in a high-frequency state; the second regulation and control mode corresponds to that one CPU core of the multi-core CPU is turned on and runs in a low-frequency state.

In the embodiment of the present invention, when the CPU regulation and control mode is the first regulation and control mode, the regulation and control module 200 is used for recording the number of the CPU cores used by the process and the time of the CPU cores used by the process, for migrating the high-frequency process to an idle CPU core for processing, and for regulating the idle CPU core to the high-frequency operating state.

In the embodiment of the present invention, when the CPU regulation and control mode is the second regulation and control mode, the regulation and control module 200 is used for recording the number of the CPU cores used by the process and the time of the CPU cores used by the process, for shutting down the idle CPU cores and keeping a CPU core in operation, and for performing frequency reduction processing on the CPU core in operation.

In the embodiment of the present invention, the CPU regulation and control mode further comprises a third regulation and control mode; when the CPU regulation and control mode is the third regulation and control mode, the regulation and control module 200 is used for acquiring the information regarding operating states of the CPU cores of the multi-core CPU at a predetermined time interval, and for, when the utilization of all CPU cores of the multi-core CPU is lower than a first predetermined value, keeping one of the CPU cores in operation and shutting down other CPU cores, and performing frequency reduction processing on the CPU core in operation; moreover, the regulation and control module 200 is also used for, when the utilization of the CPU cores in operation is greater than a second predetermined value, turning on all CPU cores, and for maintaining the balance of the utilization of the CPU cores of the multi-core CPU by migrating processes.

In the embodiment of the present invention, the regulation and control module 200 is used for controlling the switching, frequency modulation and process migration of the CPU cores of the multi-core CPU by calling a subsystem CPUSET of the multi-core CPU. The regulation and control module 200 comprises: a native service module 230 for calling a function at the bottom layer or communicating with the bottom layer core via a socket mechanism; an acquisition module 220 for acquiring a function for regulating the number of the CPU cores that are turned on, the operating frequency of the CPU cores, and process migration; and a control module 210 for controlling the switching, frequency modulation and process migration of the CPU cores of the multi-core CPU via the function.

Specifically, the regulation and control module 200 comprises a bottom layer core interface module 240 for encapsulating the Cgroups interface, and calling the subsystem CPUSET of the multi-core CPU to realize the control on the switching, frequency modulation and process migration of the CPU cores of the multi-core CPU. The native service module 230 is further used to set up a system service for calling a function at the bottom layer or communicating with the bottom layer core via a socket mechanism. A frame module for calling the system service and providing a function for regulating the number of the CPU cores that are turned on, the operating frequency of the CPU cores, and process migration through the system service. An API module for controlling the switching, frequency modulation and process migration of the CPU cores of the multi-core CPU through the function for regulating the number of the CPU cores that are turned on, the operating frequency of the CPU cores, and process migration. Functions of all of the above functional units have been described in detail in the methods above and therefore will not be described.

In summary, the method and system for regulation and control of multi-core CPU according to the present invention provide a predefined regulation and control mode and an automatic regulation and control mode of multi-core CPU in response to specific use situations and performance demand of a user's mobile device, such that the mobile device runs in the optimal performance state when the power is sufficient, and runs in the power save mode when the power is insufficient. In addition, the user may further set up the automatic regulation and control mode such that the mobile device can automatically regulate the switching, frequency modulation and process migration functions of the CPU based on the use situation of its CPU. With the present invention, a mobile device user can choose to input commands in different scenarios to regulate and control the working state of every CPU core of a multi-core CPU, improve the processing capability of the multi-core CPU or attain the goal of saving energy and electric power.

It should be understood that applications of the present invention are not limited to the above examples. To those skilled in the art, improvements or modifications may be made based on the description above, and all of these improvements or modifications shall be encompassed by the appended claims of the present invention.

## Claims

1. A method for regulation and control of multi-core central processing unit (CPU), comprising:
- receiving an operating command associated with regulation and control of the multi-core CPU;
- responding to the operating command, and performing regulation and control on the CPU cores of the multi-core CPU via the bottom layer core interface according to a preset CPU regulation and control mode, the CPU regulation and control mode comprising at least one of regulating the number of the CPU cores that are turned on, regulating the operating frequency of the CPU cores, and migrating processes of the CPU cores; and
- controlling the switching, frequency modulation and process migration of the CPU cores of the multi-core CPU by calling a subsystem of the multi-core CPU.

2. The method for regulation and control of multi-core CPU as set forth in Claim 1,
- wherein the CPU regulation and control mode at least comprises a first regulation and control mode and a second regulation and control mode;
- the first regulation and control mode corresponds to that at least one of the CPU cores of the multi-core CPU is turned on and runs in a high-frequency state;
- the second regulation and control mode corresponds to that one of the CPU cores of the multi-core CPU is turned on and runs in a low-frequency state;
- wherein, when the CPU regulation and control mode is the first regulation and control mode, the method further comprises:
- recording the number of the CPU cores used by the process and the time of the CPU cores used by the process; and
- migrating the high-frequency process to an idle CPU core for processing, and regulating the idle CPU core to the high-frequency operating state;
- wherein, when the CPU regulation and control mode is the second regulation and control mode, the method further comprises:
- recording the number of the CPU cores used by the process and the time of the CPU cores used by the process; and
- shutting down the idle CPU cores, keeping a CPU core in operation, and performing frequency reduction processing on the CPU core in operation.

3. The method for regulation and control of multi-core CPU as set forth in Claim 1,
- wherein the CPU regulation and control mode further comprises a third regulation and control mode;
- when the CPU regulation and control mode is the third regulation and control mode, the method further comprises:
- acquiring the information regarding operating states of the CPU cores of the multi-core CPU at a predetermined time interval;
- when the utilization of all CPU cores of the multi-core CPU is lower than a first predetermined value, keeping one of the CPU cores in operation and shutting down other CPU cores, and performing frequency reduction processing on the CPU core in operation;
- when the utilization of the CPU cores in operation is greater than a second predetermined value, turning on all CPU cores; and
- maintaining the balance of the utilization of the CPU cores of the multi-core CPU by migrating processes.

4. The method for regulation and control of multi-core CPU as set forth in Claim 1,
- wherein the step of controlling the switching, frequency modulation and process migration of the CPU cores of the multi-core CPU by calling a subsystem of the multi-core CPU comprises:
- calling a function at the bottom layer or using a socket mechanism to communicate with the bottom layer core;
- acquiring a function for regulating the number of the CPU cores that are turned on, the operating frequency of the CPU cores, and process migration; and
- controlling the switching, frequency modulation and process migration of the CPU cores of the multi-core CPU via the function.

5. A method for regulation and control of multi-core CPU, comprising:
- receiving an operating command associated with regulation and control of the multi-core CPU; and
- responding to the operating command, and performing regulation and control on the CPU cores of the multi-core CPU via the bottom layer core interface according to a preset CPU regulation and control mode.

6. The method for regulation and control of multi-core CPU as set forth in Claim 5, wherein the CPU regulation and control mode comprises at least one of regulating the number of the CPU cores that are turned on, regulating the operating frequency of the CPU cores, and migrating processes of the CPU cores.

7. The method for regulation and control of multi-core CPU as set forth in Claim 5,
- wherein the CPU regulation and control mode at least comprises a first regulation and control mode and a second regulation and control mode;
- the first regulation and control mode corresponds to that at least one of the CPU cores of the multi-core CPU is turned on and runs in a high-frequency state;
- the second regulation and control mode corresponds to that one of the CPU cores of the multi-core CPU is turned on and runs in a low-frequency state.

8. The method for regulation and control of multi-core CPU as set forth in Claim 7,
- wherein when the CPU regulation and control mode is the first regulation and control mode, the method further comprises:
- recording the number of the CPU cores used by the process and the time of the CPU cores used by the process; and
- migrating the high-frequency process to an idle CPU core for processing, and regulating the idle CPU core to the high-frequency operating state.

9. The method for regulation and control of multi-core CPU as set forth in Claim 7,
- wherein when the CPU regulation and control mode is the second regulation and control mode, the method further comprises:
- recording the number of the CPU cores used by the process and the time of the CPU cores used by the process; and
- shutting down the idle CPU cores, keeping a CPU core in operation, and performing frequency reduction processing on the CPU core in operation.

10. The method for regulation and control of multi-core CPU as set forth in Claim 5,
- wherein the CPU regulation and control mode further comprises a third regulation and control mode;
- when the CPU regulation and control mode is the third regulation and control mode, the method further comprises:
- acquiring the information regarding operating states of the CPU cores of the multi-core CPU at a predetermined time interval;
- when the utilization of all CPU cores of the multi-core CPU is lower than a first predetermined value, keeping one of the CPU cores in operation and shutting down other CPU cores, and performing frequency reduction processing on the CPU core in operation;
- when the utilization of the CPU cores in operation is greater than a second predetermined value, turning on all CPU cores; and
- maintaining the balance of the utilization of the CPU cores of the multi-core CPU by migrating processes.

11. The method for regulation and control of multi-core CPU as set forth in Claim 5, further comprising:
- controlling the switching, frequency modulation and process migration of the CPU cores of the multi-core CPU by calling a subsystem of the multi-core CPU.

12. The method for regulation and control of multi-core CPU as set forth in Claim 11,
- wherein the step of controlling the switching, frequency modulation and process migration of the CPU cores of the multi-core CPU by calling a subsystem of the multi-core CPU comprises:
- calling a function at the bottom layer or using a socket mechanism to communicate with the bottom layer core;
- acquiring a function for regulating the number of the CPU cores that are turned on, the operating frequency of the CPU cores, and process migration; and
- controlling the switching, frequency modulation and process migration of the CPU cores of the multi-core CPU via the function.

13. A system for regulation and control of multi-core CPU, comprising:
- an operating command receiving module for receiving an operating command associated with regulation and control of the multi-core CPU; and
- a regulation and control module for responding to the operating command, and performing regulation and control on the CPU cores of the multi-core CPU via the bottom layer core interface according to a preset CPU regulation and control mode.

14. The system for regulation and control of multi-core CPU as set forth in Claim 13, wherein the CPU regulation and control mode comprises at least one of regulating the number of the CPU cores that are turned on, regulating the operating frequency of the CPU cores, and migrating processes of the CPU cores.

15. The system for regulation and control of multi-core CPU as set forth in Claim 13,
- wherein the CPU regulation and control mode at least comprises a first regulation and control mode and a second regulation and control mode;
- the first regulation and control mode corresponds to that at least one of the CPU cores of the multi-core CPU is turned on and runs in a high-frequency state;
- the second regulation and control mode corresponds to that one of the CPU cores of the multi-core CPU is turned on and runs in a low-frequency state.

16. The system for regulation and control of multi-core CPU as set forth in Claim 15, wherein when the CPU regulation and control mode is the first regulation and control mode, the regulation and control module is used for recording the number of the CPU cores used by the process and the time of the CPU cores used by the process, for migrating the high-frequency process to an idle CPU core for processing, and for regulating the idle CPU core to the high-frequency operating state.

17. The system for regulation and control of multi-core CPU as set forth in Claim 15, wherein when the CPU regulation and control mode is the second regulation and control mode, the regulation and control module is used for recording the number of the CPU cores used by the process and the time of the CPU cores used by the process, for shutting down the idle CPU cores and keeping a CPU core in operation, and for performing frequency reduction processing on the CPU core in operation.

18. The system for regulation and control of multi-core CPU as set forth in Claim 13,
- wherein the CPU regulation and control mode further comprises a third regulation and control mode;
- when the CPU regulation and control mode is the third regulation and control mode, the regulation and control module is used for acquiring the information regarding operating states of the CPU cores of the multi-core CPU at a predetermined time interval, and for, when the utilization of all CPU cores of the multi-core CPU is lower than a first predetermined value, keeping one of the CPU cores in operation and shutting down other CPU cores, and performing frequency reduction processing on the CPU core in operation; and
- the regulation and control module is also used for, when the utilization of the CPU cores in operation is greater than a second predetermined value, turning on all CPU cores, and for maintaining the balance of the utilization of the CPU cores of the multi-core CPU by migrating processes.

19. The system for regulation and control of multi-core CPU as set forth in Claim 13, wherein the regulation and control module is used for controlling the switching, frequency modulation and process migration of the CPU cores of the multi-core CPU by calling a subsystem of the multi-core CPU.

20. The system for regulation and control of multi-core CPU as set forth in Claim 19, wherein the regulation and control module comprises:
- a native service module for calling a function at the bottom layer or using a socket mechanism to communicate with the bottom layer core;
- an acquisition module for acquiring a function for regulating the number of the CPU cores that are turned on, the operating frequency of the CPU cores, and process migration; and
- a control module for controlling the switching, frequency modulation and process migration of the CPU cores of the multi-core CPU via the function.
